# EUROPÄISCHE PATENTANMELDUNG

(11) **EP 2 253 606 A2**
(43) Veröffentlichungstag der Anmeldung: **24.11.2010**
(21) Anmeldenummer: 10005115.0
(22) Anmeldetag: 17.05.2010
(51) Int. Cl.: C04B 41/83, C04B 41/89

(54) **Verfahren zur Reperatur einer Beschädigung**

(30) Priorität: 18.05.2009 AT 7702009
(71) Anmelder: Invicon Chemical Solutions Gmbh, 6890 Lustenau (AT)
(72) Erfinder: Zanghellini, Gerhard, 9494 Schaan (LI)
(74) Vertreter: Hofmann, Ralf U.

(57) **Zusammenfassung**

Bei einem Verfahren zur Reparatur einer Beschädigung einer die Sichtseite bildenden Oberfläche (4) einer Keramikfliese wird im Bereich der Beschädigung eine Vertiefung (6) ausgebildet, in die mindestens ein aushärtbares Material (17, 20, 29) eingebracht wird. In der Folge erfolgt eine Aushärtung dieses Materials (17, 20, 29). Nachdem die Vertiefung (6) mit einem ersten aushärtbaren Material (17) zumindest im Wesentlichen gefüllt worden ist und dieses ausgehärtet ist, wird eine Schicht dieses eingefüllten und ausgehärteten Materials, die an die auf die Sichtseite der Keramikfliese liegende äußere Oberfläche des eingefüllten und ausgehärteten Materials angrenzt, wieder entfernt und in die ausgebildete Vertiefung (21) wird ein zweites aushärtbares Material (20) eingefüllt und in der Folge erfolgt eine Aushärtung dieses zweiten aushärtbaren Materials (20).

## Beschreibung

Die Erfindung bezieht sich auf ein Verfahren zur Reparatur einer Beschädigung einer die Sichtseite bildenden Oberfläche einer Keramikfliese, wobei im Bereich der Beschädigung eine Vertiefung ausgebildet wird, in die mindestens ein aushärtbares Material eingebracht wird und in der Folge eine Aushärtung dieses Materials erfolgt.

Keramische Fliesen werden relativ selten repariert da kein geeignetes Reparatursystem zur Verfügung steht. In der Regel werden beschädigte Keramikfliesen ersetzt. Das bedeutet im Durchschnitt einen Arbeitsaufwand von ca. 1 Stunde pro Fliese. Es kommt jedoch auch oft vor, dass die beschädigte Fliese nicht mehr im Handel erhältlich ist. Für diesen Fall gibt es vereinzelt Unternehmen die alte Fliesen auf Lager haben und diese zu sehr hohem Preis für solche Fälle anbieten.

Wird trotzdem repariert, so wird in vielen Fällen Fugenmaterial zur Reparatur verwendet. Die Reparatur ist dann auf jeden Fall deutlich zu sehen.

Besondere Fälle, aber auch relativ häufig, sind Wasserschäden. Zur Behebung dieser Schäden müssen Bohrungen im Abstand von ca. 2 m gemacht werden um den Boden oder die Wand auszutrocknen. Diese Bohrungen gehen durch die Fliesen. Der Durchmesser kann zwischen 40 und 150 mm liegen. In diesen Fällen wird das Kernstück der herausgetrennten Fliese wieder zurückversetzt und der runde Fugenspalt mit Fugenmaterial aufgefüllt.

Bei der Bauabnahme kommt es oft vor, dass sich kleine Schäden auf den Fliesen finden (Oberflächenabsplitterungen, die auch als ,,Mausezähne" bezeichnet werden). Diese kleinen Schäden führen im Streitfall dazu, dass die Fliesen ausgetauscht werden müssen.

Eine andere Methode zur Reparatur sind handelsübliche Polyesterharze oder Epoxide. Mit diesen Reparaturmaterialien werden jedoch keine ästhetischen Reparaturen ermöglicht. Ein besonderes Problem ist dabei die hohe Saugfähigkeit der Fliesen. Diese Saugfähigkeit führt dazu, dass das Harz (Polyester, Epoxy, etc.) durch Kapillarwirkung in die Fliese aufgesogen wird und dabei eine graue Zone um die Reparatur erzeugt.

Ein Reparatursystem für Natursteine ist aus der EP 1 589 050 A1 bekannt. Das dort beschriebene Reparaturmaterial eignet sich auch für Kunststeine sowie für betongebundene Fliesen, jedoch nur bedingt für poröse keramische Fliesen. Das Kapillarproblem ist durch die schnelle Aushärtungszeit wesentlich geringer als bei den 2K-Systemen, es kann jedoch nicht vollständig ausgeschlossen werden. Speziell bei langen Wartezeiten zwischen Auftrag des Materials und der Belichtung kann die Kapillarwirkung bereits einsetzen.

Aufgabe der Erfindung ist es eine verbesserte Reparatur von keramischen Fliesen zu ermöglichen. Erfindungsgemäß gelingt dies durch ein Verfahren mit den Merkmalen des Anspruchs 1.

Beim Verfahren gemäß der Erfindung wird, nachdem die im Bereich der Beschädigung präparierte und die Beschädigung umfassende Vertiefung mit einem ersten aushärtbaren Material zumindest im Wesentlichen (d.h. über den im Grundkörper liegenden Bereich der Vertiefung hinaus) gefüllt worden ist und dieses ausgehärtet ist, eine Schicht des ausgehärteten Materials, welche an die auf der Sichtseite der Fliese liegende äußere Oberfläche des eingefüllten und ausgehärteten Materials angrenzt und welche dünner als die gesamte Schichtdicke des ausgehärteten Materials ist, wieder entfernt und in die ausgebildete Vertiefung wird ein zweites aushärtbares Material eingefüllt und in der Folge erfolgt eine Aushärtung dieses zweiten aushärtbaren Materials.

Es kann dadurch ein schichtartiger Aufbau der Reparaturstelle erreicht werden, wodurch eine ästhetischere Reparatur gelingt. Beispielsweise kann das zweite aushärtbare Material aus dem ersten aushärtbaren Material gebildet werden, indem diesem Farbpigmente hinzugefügt werden.

Die Entfernung eines Teils des bereits eingefüllten und aushärtbaren Materials kann auch wiederholt ausgeführt werden. So kann, nachdem das zweite aushärtbare Material ausgehärtet ist, eine Schicht des ausgehärteten zweiten Materials, die an die auf der Sichtseite der Fliese liegenden äußere Oberfläche des eingefüllten und ausgehärteten zweiten Materials angrenzt und die dünner als die gesamte Schichtdicke aus dem zweiten ausgehärteten Material ist, entfernt werden und in die ausgebildete Vertiefung ein drittes aushärtbares Material eingefüllt werden und in der Folge eine Aushärtung dieses dritten aushärtbaren Materials erfolgen. Das dritte aushärtbare Material kann beispielsweise aus dem ersten aushärtbaren Material gebildet werden, indem diesem Farbpigmente hinzugefügt werden, die sich von den Farbpigmenten des zweiten aushärtbaren Materials unterscheiden können.

Wenn die Reparatur fertig gestellt ist, ist die Vertiefung vollständig ausgefüllt.

In einer vorteilhaften Ausführungsform der Erfindung wird die Vertiefung im Bereich der Beschädigung, in welche in der Folge das mindestens eine aushärtbare Material einzubringen ist, hinterschnitten ausgebildet.

Durch die Ausbildung gemäß der Erfindung kann eine mechanisch sichere Verankerung des Reparaturmaterials in der Fliese erreicht werden.

Aufgrund der hinterschnittenen Ausbildung nimmt die Breite der Vertiefung, in welche in der Folge das mindestens eine aushärtbare Material einzubringen ist, zumindest bezogen auf eine parallel zur Oberfläche der Fliese liegende Richtung ab einer bestimmten Tiefe zu. Vorzugsweise sind alle die Vertiefung begrenzenden Seitenwände, die vom Material der Keramikfliese gebildet werden, hinterschnitten ausgebildet. Somit nimmt die parallel zur Oberfläche gemessene Breite der Vertiefung in alle Richtungen parallel zur Oberfläche der Fliese ab einem senkrecht zur Oberfläche der Fliese gemessenen Ausgangswert der Tiefe der Vertiefung zu.

Meist bestehen Fliesen aus einem keramischen Grundkörper (= Scherbe) und mindestens einer den keramischen Grundkörper auf der Sichtseite der Fliese überdeckenden Deckschicht. Bei einer in dieser Form ausgebildeten Fliese ist es bevorzugt, dass der Hinterschnitt jeder der Seitenwände in einer Tiefe beginnt, die nicht tiefer als die Grenzfläche zwischen dem Grundkörper und der an ihn angrenzenden Deckschicht liegt (die Tiefe wird in Richtung rechtwinkelig zur die Sichtseite bildenden Oberfläche der Keramikfliese gemessen). Optische Beeinträchtigungen der Reparaturstelle durch einen durchscheinenden Grundkörper können dadurch vermieden oder zumindest vermindert werden. Ohne eine in dieser Weise hinterschnittene Ausbildung kann speziell bei einer Betrachtung der Fliese aus einer Blickrichtung, die winkelig zur Oberflächennormalen auf die Oberfläche der Fliese steht, eine ästhetische Beeinträchtigung der Reparatur durch ein sichtbares Durchschimmern des keramischen Grundkörpers durch das Reparaturmaterial mehr oder weniger stark vorliegen.

In einer vorteilhaften Ausführungsform der Erfindung erfolgt die Polymerbildung durch Polymerisation. Vorzugsweise wird hierbei ein Initiator eingesetzt, der die Polymerisation durch Lichteinwirkung auslöst (Photopolymerisation). Denkbar und möglich wäre es auch einen Initiator für eine Aushärtung durch eine erhöhte Temperatur einzusetzen.

In einer anderen Ausführungsform der Erfindung kann die Polymerbildung auch durch Polyaddition erfolgen. Es handelt sich hier um 2-Komponentensysteme, wobei vor der Applikation ein Basismonomer und eine einen Reaktionspartner bildende Härterkomponente miteinander gemischt werden. Ein Beispiel für solche 2-Komponentensysteme sind die Epoxid-Kunstharze.

Das mindestens eine aushärtbare Material gemäß der Erfindung kann als aushärtbare Monomere beispielsweise Acrylate und/oder Methacrylate aufweisen. Als Initiator zur Auslösung der Polymerisation kann beispielsweise Campherchinon und/oder mindestens ein Benzoinderivat für eine Photopolymerisation oder mindestens ein Peroxid und/oder Pinacol für eine Aushärtung unter Einfluss einer erhöhten Temperatur vorliegen, wobei eine Photopolymerisation bevorzugt ist.

Der Einsatz von anderen polymerisierbaren Monomeren für das aushärtbare Material ist denkbar und möglich, beispielsweise können Monomere von Polyesterharzen eingesetzt werden.

Bei 2-Komponentensystemen, z.B. Amin-Peroxid, Co-Hydroperoxyd, Amin-Epoxid, Isocyanat-Polyol, usw., erfolgt anstelle einer Aushärtung unter Anwendung von Hitze oder Licht, wodurch der enthaltene Initiator aktiviert wird, eine chemische Aushärtung. Bei diesen Systemen müssen zur Aktivierung der Aushärtung mindestens zwei Komponenten (Härter und Basismonomer) des aushärtbaren Materials direkt vor der Applikation gemischt werden. Ein Reparaturset umfasst diese Komponenten somit noch in getrennter Form und das aushärtbare Material wird durch Mischen dieser Komponenten gebildet und anschließend verarbeitet. Bevorzugt sind aber aushärtbare Materialien, die einen Initiator zur Auslösung der Polymerisation aufweisen, besonders bevorzugt durch eine Photopolymerisation. Das aushärtbare Material kann über die bislang beschriebenen Komponenten hinausgehend auch Farbstoffe und/oder weitere Zusatzstoffe enthalten.

Falls unterschiedliche aushärtbare Materialien zur Reparatur eingesetzt werden, so weisen diese vorteilhafterweise den gleichen Aushärtungsmechanismus auf, insbesondere durch Photopolymerisation. Vorzugsweise sind die aushärtbaren Monomere gleich oder gehören zumindest zur gleichen Stoffgruppe. In einer besonders bevorzugten Ausführungsform der Erfindung wird ein einzelnes aushärtbares Material und ein Set von Färbemitteln (insbesondere Farbpigmenten) bereitgestellt, die dem aushärtbaren Material zur Abmischung der gewünschten Farbe zugegeben werden können.

Eine vorteilhafte Ausführungsform der Erfindung sieht vor, dass das aushärtbare Material oder, im Falle des Einsatzes von mehreren aushärtbaren Materialien, zumindest das zuerst in die Vertiefung eingefüllte aushärtbare Material, vorzugsweise alle aushärtbaren Materialien, ein Thixotropiermittel enthält bzw. enthalten und dadurch thixotrop ist bzw. sind. Durch den Einsatz eines thixotropen aushärtbaren Materials kann der Kapillarwirkung der keramischen Fliese entgegengewirkt werden. Wird die Viskosität des thixotropen aushärtbaren Materials durch Aufbringen von Scherkräften (, die durch Zuführung von kinetischer Energie aufgebracht werden können) herabgesetzt, so kann das Material in eine im Bereich der Beschädigung ausgebildete Vertiefung, die den beschädigten Bereich umfasst, eingebracht werden, wobei auch eine gute Benetzung der Wände der Vertiefung und damit eine gute Haftung erreicht werden kann. Im Ruhezustand wird dann durch die Thixotropierung der Kapillareffekt der Fliese unterbunden.

In einer vorteilhaften Ausführungsform der Erfindung ist vorgesehen das thixotrope aushärtbare Material auf die Wände der Vertiefung aufzubringen, während Scherkräfte auf das Material ausgeübt werden. Dies kann auch als ,,Einmassieren" des thixotropen aushärtbaren Materials, z.B. durch Einbürsten, Einreiben oder Aufpinseln, bezeichnet werden. Auch durch Erzeugung von Vibrationen, beispielsweise durch Ultraschall, können Scherkräfte ausgeübt werden. Dadurch kann ein oberflächennahes Eindringen in die Poren der Keramikfliese erreicht werden, wodurch sich eine verbesserte Haftung ergibt. Durch die Thixotropie wird aber ein tiefes Eindringen unterbunden. Es folgt dann eine Aushärtung einer die Wände der Vertiefung bedeckenden Schicht, welche aber den Großteil des Volumens der Vertiefung noch freilässt. Die Vertiefung wird in der Folge mit einem aushärtbaren Material, beispielsweise dem gleichen Material, das zuvor auf die Wände der Vertiefung aufgebracht worden ist, befüllt, vorzugsweise vollständig befüllt. Es erfolgt dann die Aushärtung dieses aushärtbaren Materials.

In anderen Ausführungsformen kann aber auch vorgesehen sein die im Bereich der Beschädigung ausgebildete Vertiefung gleich vollständig oder zumindest großteils (vorzugsweise zumindest über den im Grundkörper der Fliese liegenden Bereich der Vertiefung hinaus) mit dem thixotropen aushärtbaren Material zu befüllen. Diese Vorgehensweise kann vorgesehen sein, wenn in dieser Form eine ausreichende Haftung gegenüber der zu reparierenden Keramikfliese erreicht wird. Auch können im vollständig oder zumindest großteils befüllten Zustand der Vertiefung Scherkräfte auf das thixotrope aushärtbare Material ausgeübt werden, sodass dieses stärker in einen oberflächennahen Bereich der Poren in den Wänden der Vertiefung eindringen kann. Eine solche Ausübung von Scherkräften kann insbesondere durch Vibrationen erfolgen, beispielsweise mittels einer Ultraschallsonde oder Vibrationssonde.

Beispiele für mögliche Thixotropiermittel sind:
- hochdisperse Kieselsäuren (z.B. Aerosil 200, Aerosil 711, Aerosil R972 der Firma Evonik) mit einem Konzentrationsbereich von 0,1% bis 60%, bevorzugt 2% bis 25%, und/oder
- Schichtsilikate (z. B. Bentone 38 der Firma Elementis Specialties) Konzentrationsbereich von 0,01% bis 30%, bevorzugt 0,1% bis 10%, und/oder
- Organisch modifizierte Rhizinusölderivate (z. B.: THIXCIN R der Firma Elementis Specialities) mit einem Konzentrationsbereich von 0,01% bis 20%, bevorzugt von 0,1% bis 5%.

Bei allen Prozentangaben in dieser Schrift handelt es sich um Gewichtsprozent (Gew.%).

In einer vorteilhaften Ausführungsform der Erfindung werden vor dem Einbringen des mindestens einen aushärtbaren Materials in die in der Keramikfliese im Bereich der Beschädigung ausgebildeten Vertiefung auf die Wände der Vertiefung SiOH-Gruppen aufgebracht. Gegebenenfalls kann zusätzlich zu den SiOH-Gruppen auch SiOₓ aufgebracht werden. Die Aufbringung solcher SiOH-Gruppen und gegebenenfalls auch von SiOₓ ist insbesondere in pyrolitischer Form durch ein Butangas mit Silan bekannt, beispielsweise aus der Klebetechnologie und der Zahnmedizin.

Günstigerweise werden nach der Aufbringung der SiOH-Gruppen vor dem Einbringen des mindestens einen aushärtbaren Materials die Wände der Vertiefung silanisiert. Solche Silanisierungen sind ebenfalls bereits bekannt, beispielsweise aus der Zahntechnik oder Zahnmedizin.

Durch die Erfindung werden schnelle und ästhetische Reparaturen von Keramikfliesen ermöglicht. Vorteilhafterweise kann dadurch die Oberfläche der Keramikfliese so gut nachgebildet werden, dass die Reparatur von einem Laien nicht leicht zu erkennen ist und vom Sachexperten als zumutbar angesehen wird.

Reparaturmaterialien, bei denen eine Aushärtung eines Monomers durch Polymerisation erfolgt, sind aus der Dentalindustrie bekannt, vgl. beispielsweise die US 2003/0008936 A1 und US 6 103 800 A und den in diesen Schriften genannten Stand der Technik. Auch thixotrope aushärtbare Materialien wurden in der Zahntechnik für die Konsistenzeinstellung von Füllmaterialien, Verblendmaterialien und Zementen eingesetzt. Aus der Inlay-Technik und Schalen-Technik ist es auch bereits bekannt, ein thixotropes aushärtbares Material in Kavitäten von Zähnen einzumassieren. Weiters wurden in der Zahnmedizin thixotrope aushärtbare Materialien zur direkten Füllung von Kavitäten im Mund eingesetzt, wobei die Füllung schichtweise erfolgt.

Weitere Vorteile und Einzelheiten der Erfindung werden im Folgenden auch anhand der beiliegenden Zeichnung erläutert. In der Zeichnung zeigen:
Fig. 1 einen schematischen Querschnitt durch eine keramische Fliese mit einer Beschädigung der die Sichtseite bildenden Oberfläche;
Fig. 2 bis 12 in schematischer Darstellung Verfahrensschritte bei der Reparatur der Fliese;
Fig. 13 eine schematische Darstellung eines Verfahrensschritts analog Fig. 9 aber gemäß einer modifizierten Ausführungsform;
Fig. 14 bis 16 weitere Verfahrensschritte gemäß dieser modifizierten Ausführungsform.

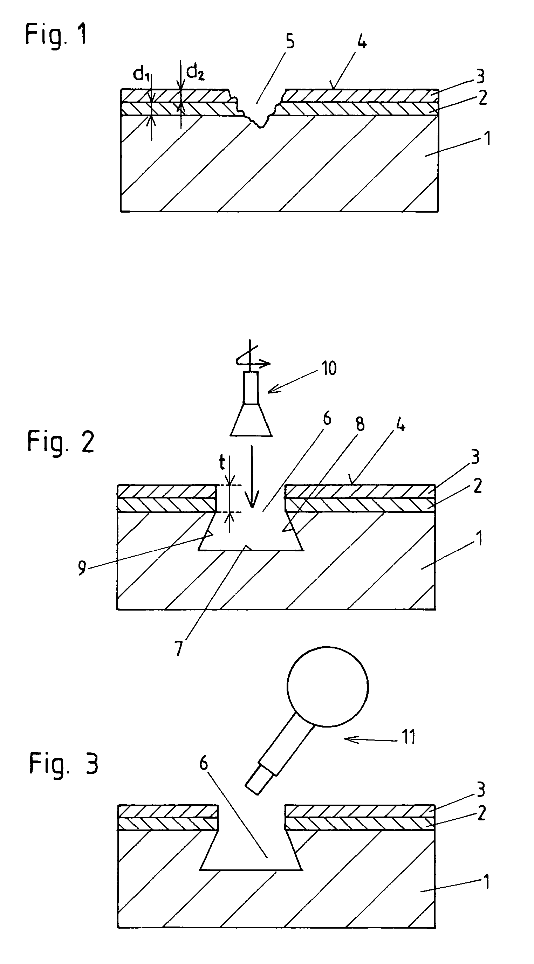

Eine zu reparierende keramische Fliese ist in Fig. 1 schematisch im Querschnitt dargestellt. Die Fliese besitzt einen Grundkörper 1, auch Scherbe genannt, aus einem keramischen Werkstoff, insbesondere aus einer Tonkeramik. Zur Sichtseite hin ist der Grundkörper 1 durch eine erste und eine zweite Deckschicht 2, 3 überdeckt. Die von der äußeren Oberfläche der äußeren Deckschicht 3 gebildete Oberfläche 4 bildet die Sichtseite der keramischen Fliese, die im montierten Zustand der Fliese sichtbar bleibt.

Die die Sichtseite bildende Oberfläche 4 weist eine Beschädigung 5 auf, die beispielsweise von einer Absplitterung, einem Ausbruch oder einer in die Fliese eingebrachten Bohrung, sacklochartig oder die Fliese durchsetzend, gebildet wird. Die Beschädigung 5 betrifft im dargestellten Beispiel beide Deckschichten 2, 3 und einen Teil des Grundkörpers 1. Zumindest die äußere Deckschicht 3 ist von der Beschädigung 5 betroffen.

Die Dicken d₁, d₂ der Deckschichten 2, 3 sind übertrieben dargestellt. In der Praxis betragen die Dicken d₁, d₂ üblicherweise maximal 1 mm, eher weniger.

Eine zu reparierende Fliese könnte auch nur eine den Grundkörper 1 sichtseitig überdeckende Deckschicht 2, 3 oder mehr als zwei solcher Deckschichten 2, 3 aufweisen. Auch bei Fliesen ohne solche Deckschichten, sodass die Fliese beispielsweise nur vom Grundkörper 1 gebildet wird, kann die Erfindung eingesetzt werden.

Die Deckschichten 2, 3 können ebenfalls aus einem keramischen Material bestehen. Beispielsweise kann es sich bei der äußeren Deckschicht 3, die die sichtseitige Oberfläche 4 der Fliese bildet, um eine Glasur handeln. Bei der Deckschicht 2 kann es sich beispielsweise um eine Tonkeramik handeln, die einen Hintergrund für die von der Glasur gebildete Deckschicht 3 darstellt, beispielsweise einen weißen Hintergrund.

Zur Reparatur der Fliese wird zunächst mit einem geeigneten Schleif- oder Fräswerkzeug im Bereich der Beschädigung eine Vertiefung 6 eingebracht, die den gesamten beschädigten Bereich umfasst. Es ist also alles Material der Fliese entfernt worden, welches zuvor an die Beschädigung angegrenzt ist. Es kann dadurch eine Vertiefung 6 mit glatten Seitenwänden 8, 9 und einer glatten Bodenwand 7 ausgebildet werden. Die ausgebildete Vertiefung 6 kann hierbei eine definierte Form aufweisen.

In Fig. 2 ist die hinterschnitten ausgebildete Vertiefung 6 dargestellt, d.h. die Breite der Vertiefung nimmt ab einem bestimmten Ausgangswert der Tiefe t zur Bodenwand 7 der Vertiefung zu, zumindest bezogen auf eine parallel zur Oberfläche 4 der Fliese bezogene Richtung. Mit anderen Worten ist im Schnitt rechtwinkelig zur Oberfläche 4 gesehen mindestens eine vom Material der Fliese gebildete Seitenwand 8, 9 der Vertiefung 6 ab dem Ausgangswert t der Tiefe der Vertiefung 6 zurückspringend ausgebildet, derart, dass in die betreffende Richtung parallel zur Oberfläche 4 die Breite der Vertiefung sich durch diesen Rücksprung zur Bodenwand 7 hin vergrößert. Vorzugsweise sind alle die Vertiefung 6 begrenzenden, vom Material der Keramikfliese gebildeten Seitenwände 8, 9 hinterschnitten bzw. zurückspringend ausgebildet.

Die allseitig hinterschnittene Vertiefung 6 kann beispielsweise wie schematisch dargestellt mit einem Kegelschleifer 10, insbesondere einem Kegel-Diamantschleifer gebildet werden. Dieser Kegelschleifer weist einen zu seinem freien Ende hin sich kegelförmig erweiternden Abschnitt auf, der an das freie Ende des Kegelschleifers anschließt.

Der hinterschnittene Bereich der Vertiefung 6 beginnt ab einem Ausgangswert t der rechtwinkelig zur Oberfläche 4 gemessenen Tiefe der Vertiefung 6, der nicht größer als die Gesamtdicke aller Deckschichten 2, 3 ist. In der Darstellung gemäß Fig. 2 beginnt der Hinterschnitt bei der Grenzfläche zwischen dem Grundkörper 1 und der an ihn angrenzenden Deckschicht 2. Die Hinterschneidung könnte auch bei einer demgegenüber geringeren Tiefe beginnen, also im Bereich der Deckschicht 2 oder 3.

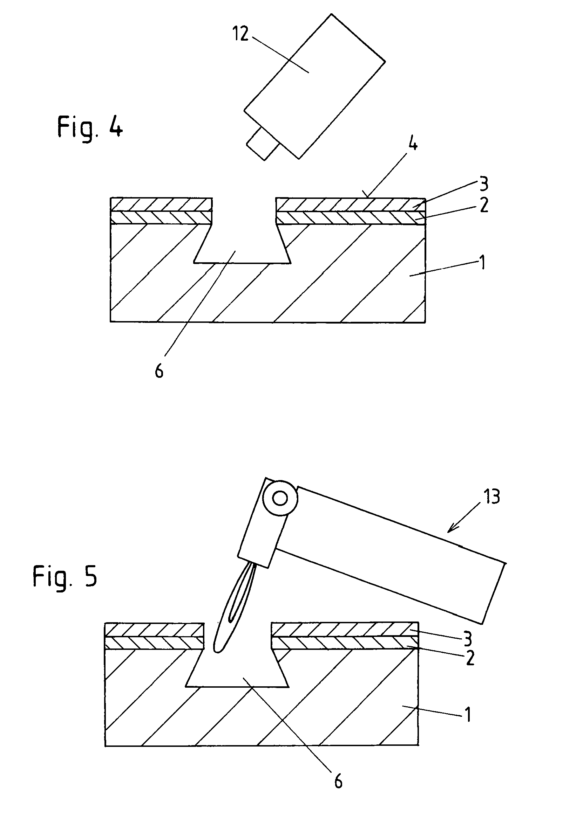

In der Folge wird die präparierte Vertiefung 6 gereinigt, beispielsweise indem Staubreste mit einem Blasebalg 11 weggeblasen werden (schematisch in Fig. 3 dargestellt) und eine Reinigung mit einer Reinigungslösung 12 (schematisch in Fig. 4 dargestellt), beispielsweise Alkohol, erfolgt.

In der Folge werden auf die Wände (Bodenwand 7 und Seitenwände 8, 9) SiOH-Gruppen aufgebracht, beispielsweise pyrolytisch mittels eines mit Silan versetzten Butangases, wie in Fig. 5 schematisch durch die Beflammungseinrichtung 13 dargestellt. Dies ist auch als Pyrosil-Technik bekannt.

Je nach Material der Keramikfliese im Bereich der Wände 7, 8, 9 der Vertiefung 6 kann es hierbei auch zur Aufbringung von SiOₓ auf die Wände 7, 8, 9 kommen.

Wenn in Abhängigkeit vom Material der Keramikfliese im Bereich der Wände 7, 8, 9 der Vertiefung 6 auch Silikat entsteht, so handelt es sich um eine Art von Silikatisierung.

Zur Aufbringung von SiOH-Gruppen auf die Wände 7, 8, 9 der Vertiefung 6 kann grundsätzlich jede Art von Silikatisierung eingesetzt werden, beispielsweise kann Kieselsol oder Wasserglas aufgetragen werden, immer bilden sich auch SiOH-Gruppen.

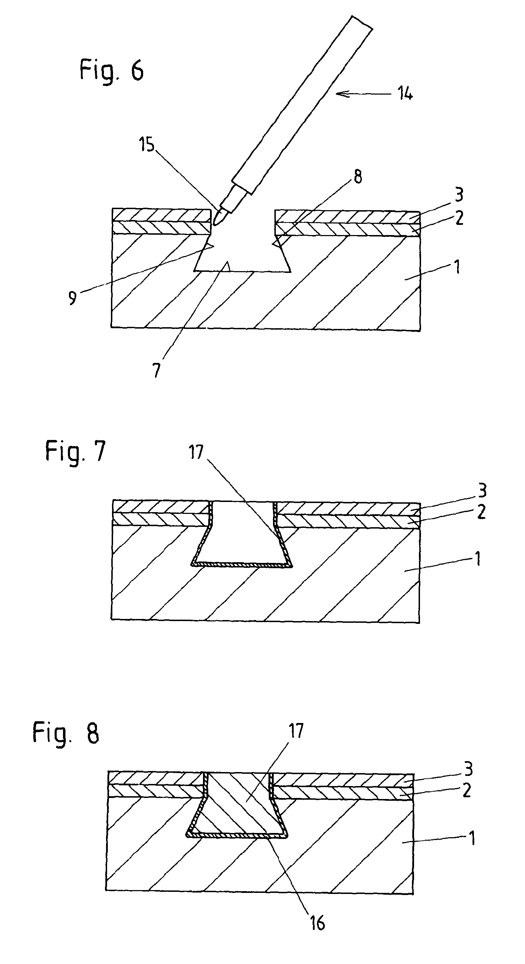

In der Folge wird eine Silanisierung der Wände 7, 8, 9 der Vertiefung 6 durchgeführt, insbesondere durch flüssigen Auftrag eines Silans, beispielsweise wie in Fig. 6 schematisch dargestellt mit einem Applikator 14, der eine Filzspitze 15 aufweist.

Durch die Silanisierung soll einerseits die Benetzbarkeit der Oberfläche der Wände 7, 8, 9 der Vertiefung 6 verbessert werden, andererseits ein chemischer Verbund mit dem im Weiteren einzubringenden aushärtbaren Material erreicht werden.

Beispielsweise wird, wenn das im Weiteren einzufüllende aushärtbare Material ein Poly(meth)acrylat bildet, ein (Meth)acryloxy-Silan eingesetzt, z.B. Gamma-Methacryloxy-Propyl-Trimethoxy-Silan. Wenn das aushärtbare Material ein Polyester bildet, so kann ein Vinyl-Silan eingesetzt werden. Wenn das aushärtbare Material ein Epoxid-Kunstharz bildet, so kann beispielsweise Glycidyl-Silan eingesetzt werden.

In der Folge wird ein aushärtbares Material in die Vertiefung 6 eingebracht. Vorzugsweise wird hierbei zunächst mit dem aushärtbaren Material eine die Wände 7, 8, 9 bedeckende ausgehärtete Schicht 16 gebildet und in der Folge die Vertiefung 6 mit dem aushärtbaren Material 17 zumindest im Wesentlichen vollständig gefüllt.

Das aushärtbare Material 17 enthält mindestens ein aushärtbares Monomer, beispielsweise Acrylate und/oder Methacrylate, einen Initiator für die Polymerbildung (oder auch eine Härterkomponente, wenn es sich um ein 2-Komponentensystem handelt) sowie mindestens ein Thixotropiermittel, sodass das aushärtbare Material 17 thixotrop ist. Als Thixotropiermittel kann beispielsweise mindestens einer der folgenden Stoffe enthalten sein: eine hochdisperse Kieselsäure, ein Schichtsilikat, eine gefällte Kieselsäure, thixotropierende Mikrofasern.

Zur Ausbildung der Schicht 16 wird aushärtbares Material 17 in die Wände 7, 8, 9 einmassiert. Durch die hierbei aufgebrachten Scherkräfte wird die Viskosität des aushärtbaren Materials 17 herabgesetzt, sodass es etwas in die Oberfläche der Wände 7, 8, 9 eindringen kann, je nach der Porösität der Wände 7, 8, 9 im Bereich des Grundkörpers 1 bzw. einer jeweiligen Deckschicht 2, 3. Zumindest im Bereich des Grundkörpers 1 besitzt die keramische Fliese eine mehr oder weniger große Porösität. Ein tieferes Eindringen wird aber durch die Thixotropie des aushärtbaren Materials verhindert, da nach dem Eindringen in die Oberfläche keine Scherkräfte mehr ausgeübt werden können und somit die Viskosität des aushärtbaren Materials 17 derart zunimmt, dass in der Folge ein weiteres Eindringen in die Poren verhindert wird. Das in die Vertiefung 6 eingebrachte Material wird in der Folge ausgehärtet, vorzugsweise nicht gehärtet, sodass sich die ausgehärtete Schicht 16 bildet. Der Großteil des ursprünglichen Volumens der Vertiefung 6 ist aber durch das bisher eingebrachte, die Schicht 16 bildende aushärtbare Material 17 noch frei geblieben.

In der Folge wird in dieses frei gebliebene Volumen aushärtbares Material 17 eingefüllt, sodass die Vertiefung zumindest im Wesentlichen vollständig aufgefüllt ist, wie dies in Fig. 8 dargestellt ist. Zum Einfüllen des aushärtbaren Materials 17 in die Vertiefung 6 wird das aushärtbare Material 17 zunächst durch Aufbringung von Scherkräften (=Einbringen von kinetischer Energie) in seiner Viskosität herabgesetzt, beispielsweise durch Rühren.

Im Wesentlichen vollständig aufgefüllt bedeutet, dass die Vertiefung zumindest bis über den im Grundkörper 1 liegenden Bereich der Vertiefung 6 aufgefüllt ist.

In der Folge wird das aushärtbare Material 17 ausgehärtet, vorzugsweise durch Lichthärten, wobei das ausgehärtete Material das Reparatur-Kernmaterial 26 bildet.

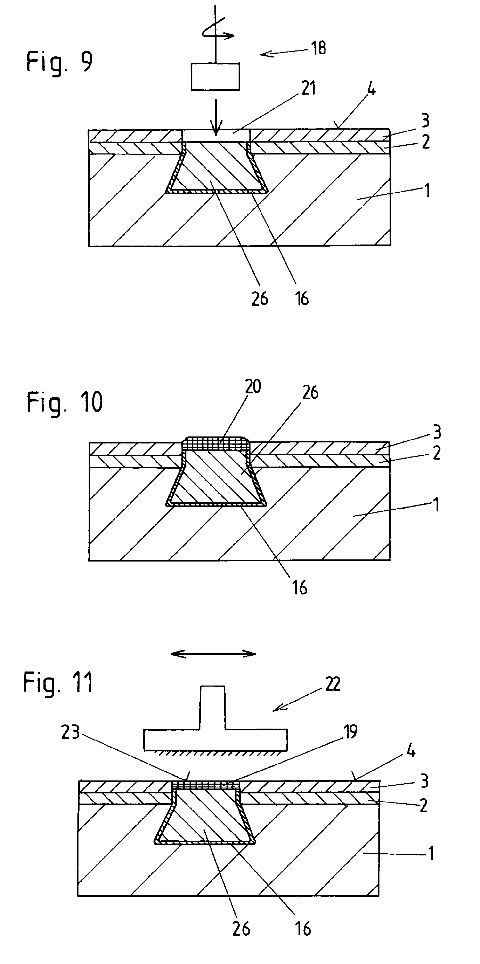

In der Folge wird eine Schicht des Reparatur-Kernmaterials 26, die an die auf der Sichtseite der Fliese liegende äußere Oberfläche des eingefüllten und ausgehärteten Materials angrenzt, wieder entfernt, wie dies in Fig. 9 schematisch dargestellt ist, wodurch eine Vertiefung 21 ausgebildet wird. Das Entfernen bzw. Abtragen dieser Schicht kann beispielsweise durch einen Zylinderschleifer 18, insbesondere Zylinder-Diamantschleifer erfolgen, der in Fig. 9 schematisch dargestellt ist.

Die Tiefe der Vertiefung 21 ist jedenfalls geringer als die halbe Tiefe der Vertiefung 6. Vorzugsweise ist die Vertiefung 21 nicht tiefer als der 1,5-fache Wert der Gesamtdicke aller vorhandenen Deckschichten 2, 3 zusammen.

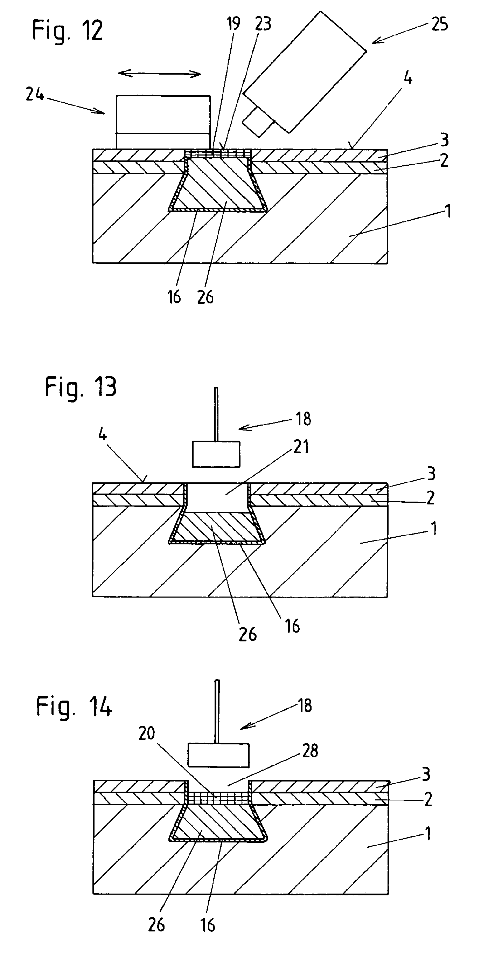

Wenn im Weiteren nur eine einzelne Reparatur-Deckschicht 19 (vgl. Fig. 11) ausgebildet werden soll, die das Kernmaterial 26 der Reparatur überdeckt, kann die Dicke der abgetragenen Schicht beispielsweise der Dicke d₂ der die sichtseitige Oberfläche 4 bildenden Deckschicht 3, z.B. eine Lasur, entsprechen, vorzugsweise beträgt die Dicke der abgetragenen Schicht weniger als die Gesamtdicke aller Deckschichten 2, 3. Falls mehr als eine Reparatur-Deckschicht 19 ausgebildet werden soll, wie weiter unten anhand der Fig. 12 bis 15 beschrieben, wird die Schichtdicke des wieder entfernten Kernmaterials 26 vorzugsweise tiefer gewählt, beispielsweise bis zur Tiefe der Grenzfläche zwischen dem Grundkörper 1 und der an ihn angrenzenden Deckschicht 2.

In der Folge wird ein zweites aushärtbares Material 20 in die durch das Entfernen des ausgehärteten ersten aushärtbaren Materials 17 gebildete Vertiefung 21 eingefüllt, wie dies aus Fig. 10 ersichtlich ist, wobei die Vertiefung 21 vollständig ausgefüllt wird. Das zweite aushärtbare Material 20 kann aus dem ersten aushärtbaren Material 17 durch Zugabe von Farbpigmenten gebildet werden, um die Farbe der Reparaturstelle mit der Farbe der restlichen Oberfläche 4 der keramischen Fliese abzustimmen.

Das zweite aushärtbare Material 20 wird ausgehärtet und der Überschuss wird plangeschliffen, beispielsweise wie schematisch dargestellt mit einem Hobel 22 und Schleifleinen. Es ist somit die Reparatur-Deckschicht 19 ausgebildet worden.

In der Folge erfolgt eine Oberflächenbehandlung der Reparaturstelle, um die Reparatur-Oberfläche 23 in ihrem Aussehen der Oberfläche 4 der Fliese im übrigen Bereich anzupassen. Beispielsweise kann diese Oberflächenbehandlung im Polieren der Reparatur-Oberfläche 23 bestehen. Es kann dadurch eine Hochglanz-Oberfläche ausgebildet werden. In Fig. 12 sind schematisch ein Polierer 24 und ein Behälter 25 für Polierpaste dargestellt.

Falls eine matte oder eine strukturierte Oberfläche gewünscht ist, so wird eine andere Oberflächenbearbeitung eingesetzt, wie weiter unten noch genauer beschrieben.

Wenn die Härtung durch Lichthärten erfolgt, so kann die Reparatur-Deckschicht 19 auf Grund ihrer relativ geringen Dicke trotz des Zusatzes von Farbpigmenten zum aushärtbaren Material 17 ausgehärtet werden (wenn dem Reparatur-Kernmaterial 26 entsprechend Farbpigmente zugesetzt würden, so wäre eine vollständige Durchhärtung gegebenenfalls nicht gegeben).

Weiters wird durch die Ausbildung mit einem Reparatur-Kernmaterial 26 und einer Reparatur-Deckschicht 19 ein Schichtaufbau erzielt, der den Schichtaufbau der Keramikfliese zumindest teilweise nachbildet. Die Reparaturstelle kann dadurch in ihrem optischen Eindruck der übrigen Oberfläche 4 der Fliese besser angenähert werden als ohne einen solchen Schichtaufbau.

Zudem ist die Farbmischung zur Erzielung der gleichen Farbe wie im Bereich der übrigen Oberfläche 4 der Fliese sehr kritisch und bei einer geringen Menge des zweiten aushärtbaren Materials 20 kann diese Farbmischung leichter angeglichen werden, beispielsweise auch indem zum bereits in die Vertiefung 21 eingebrachten zweiten aushärtbaren Material 20 noch Pigmente zugemischt werden.

Eine Ausführung mit einer einzelnen Reparatur-Deckschicht 19 kann beispielsweise zur Reparatur von weißen Fliesen eingesetzt werden, wobei dem zweiten aushärtbaren Material 20 entsprechend weiße Farbpigmente zugesetzt werden.

Durch die hinterschnittene Ausbildung der Vertiefung 6 wird auch verhindert, dass das Material des Grundkörpers 1 der Fliese bei einer Betrachtung der Sichtseite der Fliese aus einer Blickrichtung, die winkelig zur Oberflächennormale auf die Oberfläche 4 steht, nicht oder wesentlich weniger durch das Reparatur-Kernmaterial 26 und die Reparatur-Deckschicht 27 hindurch sichtbar ist. Bei einer zylindrischen Ausbildung der Vertiefung könnte ein solches Durchschimmern des Materials des Grundkörpers 1 eine optische Beeinträchtigung darstellen und noch stärker bei einer beispielsweise halbkreisförmigen Ausbildung der Vertiefung 6.

Ein Ausführungsbeispiel, bei dem bei der Reparatur zwei Reparatur-Deckschichten 19, 27 ausgebildet werden, ist in den Fig. 13 bis 16 dargestellt. Eine solche Ausführung kann beispielsweise zur Reparatur von farbigen Fliesen eingesetzt werden, wobei die an das Reparatur-Kernmaterial 26 angrenzende Reparatur-Deckschicht 19 weiß ausgebildet wird und einen Hintergrund für die die Reparatur-Oberfläche 23 auf der Sichtseite der Fliese bildende Reparatur-Deckschicht 27 darstellt, der Farbpigmente entsprechend der Farbe der Fliese im Bereich der restlichen Oberfläche 4 zugesetzt sind.

Die Vertiefung 21 wird durch Entfernung von Material aus dem Reparatur-Kernvolumen 26, beispielsweise mit einem Zylinderschleifer 18 tiefer als bis zur Grenzfläche zwischen der an den Grundkörper 1 angrenzenden Deckschicht 2 und der die Oberfläche 4 bildenden Deckschicht 3 ausgebildet, beispielsweise mindestens bis zur Tiefe der Grenzfläche zwischen dem Grundkörper 1 und der an ihm angrenzenden Deckschicht 2, vgl. Fig. 13. In diese Vertiefung 21 wird ein zweites aushärtbares Material eingefüllt, wobei die Vertiefung 21 mit dem zweiten aushärtbaren Material zumindest im Wesentlichen gefüllt wird. Im Wesentlichen gefüllt bedeutet hier, dass das zweite aushärtbare Material 20 zumindest bis über die Grenzschicht zwischen der an den Grundkörper 1 angrenzenden Deckschicht 2 und der die Oberfläche 4 bildenden Deckschicht 3 gefüllt wird.

Das zweite aushärtbare Material 20 wird ausgehärtet und in der Folge wird eine Schicht des zweiten ausgehärteten Materials entfernt, beispielsweise mit einem Zylinderschleifer 18, wie in Fig. 14 dargestellt. Die Entfernung des Materials kann beispielsweise bis zur Tiefe der Grenzschicht zwischen den beiden Deckschichten 2, 3 erfolgen. In diese in Fig. 14 dargestellte Vertiefung 28 wird ein drittes aushärtbares Material 29 eingefüllt, wobei die Vertiefung 28 vollständig ausgefüllt wird. Das dritte aushärtbare Material wird vorzugsweise aus dem ersten aushärtbaren Material 17 durch Hinzufügung von Farbpigmenten gewonnen, wobei die Farbpigmente unterschiedlich von den Farbpigmenten sind, die dem ersten aushärtbaren Material 17 zur Gewinnung des zweiten aushärtbaren Materials 20 hinzugefügt worden sind.

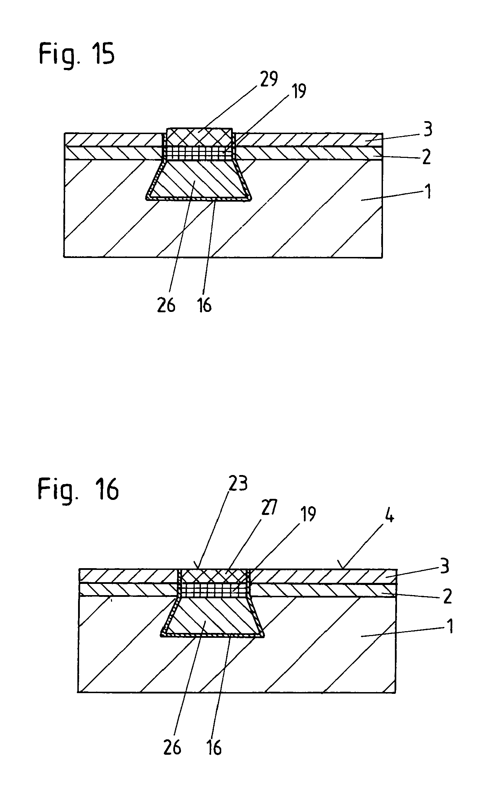

Nach dem Ausfüllen der Vertiefung 28 mit dem dritten aushärtbaren Material 29, wie dies in Fig. 15 dargestellt ist, wird das dritte aushärtbare Material ausgehärtet und ein Überschuss wird entfernt, d.h. die Reparaturstelle wird zur Oberfläche 4 im übrigen Bereich der Fliese plangeschliffen. Somit ist eine zweite Reparatur-Deckschicht 27 ausgebildet worden (Fig. 16).

Es folgt wiederum eine Oberflächenbehandlung, hier der Reparatur-Deckschicht 27, entsprechend dem gewünschten Aussehen der Reparatur-Oberfläche 23, beispielsweise durch Polieren. Die reparierte Fliese ist in Fig. 16 dargestellt.

Wenn anstelle einer glänzenden Reparatur-Oberfläche 23 eine matte Reparatur-Oberfläche ausgebildet werden soll, so kann nach dem Planschleifen der Reparaturstelle, d.h. im Ausführungsbeispiel gemäß den Fig. 1 bis 12 der Reparatur-Deckschicht 19 und im Ausführungsbeispiel gemäß den Fig. 13 bis 16 der Reparatur-Deckschicht 27, nochmals eine dünne Schicht eines aushärtbaren Materials aufgetragen werden, wobei die Schichtdicke vorzugsweise weniger als 1 mm beträgt. Das aufgetragene aushärtbare Material entspricht hierbei vorzugsweise dem aushärtbaren Material 20, 29, aus dem die direkt darunter liegende Schicht 19, 27 ausgebildet worden ist. Auf die aufgebrachte dünne Schicht wird eine Folie aufgelegt und wieder abgezogen. Die Folie kann hierbei mehrmals hintereinander aufgebracht und abgezogen werden, bis die entsprechende Mattigkeit erreicht wird. In der Folge wird das verbleibende aushärtbare Material ausgehärtet.

Die Dicke der aufgetragenen dünnen Schicht des aushärtbaren Materials ist geringer als die Schichtdicke der an die Sichtseite der Fliese angrenzenden Deckschicht 3.

Falls die Aushärtung durch Lichthärten erfolgt, so wird dieses Aushärten vorzugsweise zweistufig durchgeführt, zunächst wird lichtgehärtet, in der Folge wird die Reparatur-Oberfläche 23 mit einem Glyceringel abgedeckt und es wird ein zweites Mal mit Licht ausgehärtet (durch die abdeckende Glycerinschicht hindurch; hierbei wird eine beim ersten Aushärten inhibierte Schicht an der Oberfläche nachgehärtet). Das Glyceringel wird abgewaschen und die matte Reparatur-Oberfläche 23 ist fertiggestellt.

Soll eine strukturierte Reparatur-Oberfläche 23 ausgebildet werden, so wird die nach dem Planschleifen zusätzlich aufgebrachte dünne Schicht vor dem Aushärten entsprechend strukturiert, beispielsweise durch Bürsten, Kämmen oder dergleichen. Dies kann beispielsweise mit einem Pinsel, einer Malerrolle oder dergleichen durchgeführt werden. In der Folge erfolgt wiederum das Aushärten, beispielsweise wie im Zusammenhang mit der matten Oberfläche beschrieben zweistufig.

Es folgen Beispiele für mögliche Ausbildungen eines thixotropen aushärtbaren Materials 17:

### Beispiel 1

| | |
|---|---|
| Urethandimethacrylat | 77,85% |
| Polyethylenglykoldimethacrylat | 14% |
| Aerosil 200 | 6% |
| Campherchinon | 0,15% |
| Titandioxid | 2% |

Diese Mischung ist besonders für vertikal liegende Fliesen geeignet. Die Mischung ist nach Zuführung von kinetischer Energie gut fließfähig und nach wenigen Minuten wieder standfest. Das Produkt ist deckend und darum als Grundierung für die Reparatur gut geeignet.

### Beispiel 2

| | |
|---|---|
| Urethandimethacrylat | 69,25% |
| Polyethylenglykoldimethacrylat | 14% |
| Aerosil R711 | 16% |
| Campherchinon | 0,15% |
| Ultramarinblau | 0,6% |

Dieses Produkt ist besonders für horizontale Fliesen geeignet. Das Produkt ist beim Auftragen fliessfähig und nach wenigen Sekunden wieder standfest. Das Produkt ist durchscheinend blau und kann so für die Imitation einer blauen Glasur verwendet werden.

Unterschiedliche Modifikationen der beschriebenen Ausführungsbeispiele sind denkbar und möglich ohne den Bereich der Erfindung zu verlassen. So könnte beispielsweise die Reparatur auch mit mehr als zwei Reparatur-Deckschichten 19, 27 ausgebildet werden. Die jeweils durch Einfüllen und Aushärten eines aushärtbaren Materials in eine Vertiefung gebildet werden, welche durch Entfernen eines bereits zuvor eingefüllten und ausgehärteten Materials gebildet wird.

Die Ausbildung der Schicht 16 könnte auch entfallen, beispielsweise wenn die Haftung an der zu reparierenden Fliese auch ohne eine solche Schicht 16 ausreichend ist oder wenn die ausgebildete Vertiefung 6, die die Beschädigung umfasst, vollständig oder zumindest großteils mit dem aushärtbaren Material 26 gefüllt wird und auf dieses in der Folge Scherkräfte ausgeübt werden, insbesondere durch Erzeugung von Vibrationen (beispielsweise mittels einer Ultraschallsonde oder Vibrationssonde). Auch in diesem Fall wird das thixotrope aushärtbare Material 26 unter Aufbringung von Scherkräften auf die Wände 7, 8, 9 der Vertiefung 6 aufgebracht.

### Legende

### zu den Hinweisziffern:

- 1: Grundkörper
- 2: Deckschicht
- 3: Deckschicht
- 4: Oberfläche
- 5: Beschädigung
- 6: Vertiefung
- 7: Bodenwand
- 8: Seitenwand
- 9: Seitenwand
- 10: Kegelschleifer
- 11: Blasebalg
- 12: Reinigungslösung
- 13: Beflammungseinrichtung
- 14: Applikator
- 15: Filzspitze
- 16: Schicht
- 17: aushärtbares Material
- 18: Zylinderschleifer
- 19: Reparatur-Deckschicht
- 20: zweites aushärtbares Material
- 21: Vertiefung
- 22: Hobel
- 23: Reparatur-Oberfläche
- 24: Polierer
- 25: Behälter
- 26: Reparatur-Kernmaterial
- 27: Reparatur-Deckschicht
- 28: Vertiefung
- 29: drittes aushärtbares Material

## Patentansprüche

1. Verfahren zur Reparatur einer Beschädigung einer die Sichtseite bildenden Oberfläche (4) einer Keramikfliese, wobei im Bereich der Beschädigung eine Vertiefung (6) ausgebildet wird, in die mindestens ein aushärtbares Material (17, 20, 29) eingebracht wird und in der Folge eine Aushärtung dieses Materials (17, 20, 29) erfolgt, **dadurch gekennzeichnet, dass**, nachdem die Vertiefung (6) mit einem ersten aushärtbaren Material (17) zumindest im Wesentlichen gefüllt worden ist und dieses ausgehärtet ist, eine Schicht dieses eingefüllten und ausgehärteten Materials, die an die auf die Sichtseite der Keramikfliese liegende äußere Oberfläche des eingefüllten und ausgehärteten Materials angrenzt, wieder entfernt wird und in die ausgebildete Vertiefung (21) ein zweites aushärtbares Material (20) eingefüllt wird und in der Folge eine Aushärtung dieses zweiten aushärtbaren Materials (20) erfolgt.

2. Verfahren nach Anspruch 1, **dadurch gekennzeichnet, dass** das zweite aushärtbare Material (20) das erste aushärtbare Material (17) und zusätzlich Farbpigmente enthält.

3. Verfahren nach Anspruch 1 oder 2, **dadurch gekennzeichnet, dass**, nachdem das zweite aushärtbare Material (20) ausgehärtet ist, eine Schicht des ausgehärteten zweiten aushärtbaren Materials, die an die auf der Sichtseite der Keramikfliese liegende äußere Oberfläche des ausgehärteten zweiten aushärtbaren Materials angrenzt und die dünner als die gesamte Schichtdicke des ausgehärteten zweiten aushärtbaren Materials (20) ist, wieder entfernt wird und in die ausgebildete Vertiefung (28) ein drittes aushärtbares Material (29) eingefüllt wird und in der Folge eine Aushärtung dieses dritten aushärtbaren Materials erfolgt.

4. Verfahren nach Anspruch 3, **dadurch gekennzeichnet, dass** das dritte aushärtbare Material (29) das erste aushärtbare Material (17) und zusätzlich Farbpigmente enthält, die sich von den zusätzlichen Farbpigmenten des zweiten aushärtbaren Materials (20) unterscheiden.

5. Verfahren nach einem der Ansprüche 1 bis 4, **dadurch gekennzeichnet, dass** die Vertiefung (6) im Bereich der Beschädigung, in welche in der Folge das mindestens eine aushärtbare Material (17, 20, 29) einzubringen ist, hinterschnitten ausgebildet wird.

6. Verfahren nach Anspruch 5, **dadurch gekennzeichnet, dass** alle die Vertiefung (6) begrenzenden, vom Material der Keramikfliese gebildeten Seitenwände (8, 9) hinterschnitten ausgebildet werden.

7. Verfahren nach Anspruch 5 oder 6, **dadurch gekennzeichnet, dass** die Keramikfliese einen keramischen Grundkörper (1) und mindestens eine den keramischen Grundkörper (1) auf der Sichtseite der Keramikfliese überdeckende Deckschicht (2, 3) aufweist und dass die hinterschnittene Ausbildung der Vertiefung (6) in einer Tiefe (t) beginnt, die der Tiefe der Grenzfläche zwischen dem Grundkörper und der an ihn angrenzenden Deckschicht (2, 3) entspricht oder geringer als diese Tiefe ist.

8. Verfahren nach einem der Ansprüche 1 bis 7, **dadurch gekennzeichnet, dass** nach der Ausbildung der Vertiefung (6) in der Keramikfliese im Bereich der Beschädigung und vor dem Einbringen des mindestens einen aushärtbaren Materials (17, 20, 29) SiOH-Gruppen auf die Wände (7, 8, 9) der Vertiefung (6) aufgebracht werden.

9. Verfahren nach Anspruch 8, **dadurch gekennzeichnet, dass** zusätzlich zu den SiOH-Gruppen auch SiOₓ aufgebracht wird.

10. Verfahren nach Anspruch 8 oder 9, **dadurch gekennzeichnet, dass** nach dem Aufbringen der SiOH-Gruppen und vor dem Einbringen des mindestens einen aushärtbaren Materials (17, 20, 29) die Wände (7, 8, 9) der Vertiefung (6) silanisiert werden.

11. Verfahren nach einem der Ansprüche 1 bis 10, **dadurch gekennzeichnet, dass** das aushärtbare Material (17, 20, 29) lichthärtbar ist.

12. Verfahren nach einem der Ansprüche 1 bis 11, **dadurch gekennzeichnet, dass**, nachdem die Vertiefung (6) mit dem mindestens einen aushärtbaren Material (17, 20, 29) aufgefüllt und dieses ausgehärtet ist und die Oberfläche des ausgehärteten Materials mit der die Sichtseite bildenden Oberfläche (4) im an die Reparaturstelle angrenzenden Bereich plangeschliffen worden ist, nochmals eine Schicht eines aushärtbaren Materials (17) aufgetragen wird, welches in der Folge ausgehärtet wird, wobei die Dicke der aufgetragenen Schicht des aushärtbaren Materials (17) vorzugsweise geringer als die Schichtdicke der an die Sichtseite der Fliese angrenzende Deckschicht (3) ist.

13. Verfahren nach Anspruch 12, **dadurch gekennzeichnet, dass** die Aushärtung des nach dem Planschleifen nochmals aufgetragenen aushärtbaren Materials (17) zweistufig erfolgt, wobei nach einer ersten Lichthärtung Glyzeringel aufgetragen wird und durch dieses hindurch eine zweite Lichthärtung durchgeführt wird.

14. Verfahren nach Anspruch 12 oder 13, **dadurch gekennzeichnet, dass** zur Ausbildung einer matten Oberfläche auf die Schicht aus aushärtbarem Material (17), die nach dem Planschleifen aufgetragen worden ist, vor dem Aushärten eine Folie aufgelegt wird, die vor dem Aushärten wieder abgezogen wird.

15. Verfahren nach Anspruch 12 oder 13, **dadurch gekennzeichnet, dass** zur Ausbildung einer strukturierten Oberfläche die Schicht aus aushärtbarem Material (17), die nach dem Planschleifen aufgebracht worden ist, vor dem Aushärten strukturiert wird.
